# EUROPEAN PATENT APPLICATION

(11) **EP 3 422 596 A1**
(43) Date of publication of application: **02.01.2019**
(21) Application number: 16891649.2
(22) Date of filing: 08.12.2016
(51) Int. Cl.: H04B 7/10, H04J 99/00, H04W 16/28, H04W 24/10

(54) **WIRELESS COMMUNICATION SYSTEM, TRANSMITTING DEVICE, RECEIVING DEVICE, AND COMMUNICATION METHOD**

(30) Priority: 23.02.2016 JP 2016031913
(71) Applicant: KDDI Corporation, Tokyo 163-8003 (JP)
(72) Inventor: YUNOKI Katsuo, Fujimino-shi Saitama 356-8502 (JP)
(74) Representative: Wallinger, Michael
(86) International application number: PCT/JP2016/086546
(87) International publication number: WO 2017/145493

(57) **Abstract**

In a wireless communication system, a transmitting device sequentially transmits multiple directional beams each having different directivity to a receiving device via each of multiple directional antennas, thus setting directivity for each directional beam to be transmitted to the receiving device according to a response signal to multiple directional beams. The receiving device sequentially receives multiple directional beams and thereby selects one or more appropriate directional beams among multiple directional beams, thus notifying the transmitting device of the selected directional beam.

## Description

### TECHNICAL FIELD

The present invention relates to a wireless communication system, a transmitting device, a receiving device, and a communication method.

The present application claims the benefit of priority on Japanese Patent Application No. 2016-31913 filed on February 23, 2016, the subject matter of which is hereby incorporated herein by reference.

### BACKGROUND ART

As to next-generation wireless communication methods, engineers have discussed technologies for further increasing communication speed. For example, engineers have studied various technologies because it is expected that high frequency bands of 30 GHz or more, referred to as millimeter-wave bands, can be used for broad communications.

As next-generation wireless communication methods, technologies for transmitting directional beams using small widths of beams via multiple antenna elements have been known (see Patent Literature Document 1).

As wireless LANs, technologies for transmitting radio waves of millimeter-wave bands via multiple antenna arrays have been known (see Non-Patent Literature Document 1).

### CITATION LIST

### PATENT LITERATURE DOCUMENT

Patent Literature Document 1: Japanese Patent Application Publication No. 2015-185952

### NON-PATENT LITERATURE DOCUMENT

Non-Patent Literature Document 1: "A Framework for MIMI Operation over mmWave Links", [online], IEEE, [retrieved on January 8, 2016], the Internet <URL: https://mentor.ieee.org/802.11/dcn/15/11-15-0334-01-ng60-mimo-framework.pptx>

### SUMMARY OF INVENTION

### TECHNICAL PROBLEM

The following description is made with respect to the situation that multiple directional antennas are used for communication between a wireless base station device and a terminal device. In this situation, it is necessary to adjust the communication condition such as transmitting directions of directional beams transmitted via directional antennas mounted on a wireless base station device and the communication condition such as directions of directional beams received by an antenna mounted on a terminal device.

Similarly, it is necessary to adjust communication conditions between a transmitting device and a receiving device in the situation that multiple array antennas are used for communication between a transmitting device and a receiving device and for communication between a wireless base station device and a terminal device.

The present invention is made to solve the aforementioned problem, and therefore, the present invention aims to carry out communication using directional beams between a transmitting device having multiple directional antennas and a receiving device having one or multiple directional antennas.

### SOLUTION TO PROBLEM

(1) A wireless communication device according to one aspect of the present invention is a wireless communication system which includes a transmitting device equipped with a plurality of directional antennas, and a receiving device configured to wirelessly communicate with the transmitting device. The transmitting device sequentially transmits a plurality of directional beams having different directivity via a plurality of directional antennas, thus setting directivity for each directional beam transmitted to the receiving device according to a response signal to a plurality of directional beams. The receiving device sequentially receives the plurality of directional beams so as to select one or more appropriate directional beams among a plurality of directional beams, thus notifying the transmitting device of information representing the selected directional beam.
(2) A wireless communication system according to one aspect of the present invention is the wireless communication system according to (1), wherein the transmitting device sequentially transmits first signals, each including the number of directional antennas and a transmitting method of a plurality of directional beams, to the receiving device via each of a plurality of directional antennas, thus setting the transmitting method of a plurality of directional beams according to a first response signal to the first signal. The receiving device sequentially receives first signals so as to notify the transmitting device of the first response signal including information representing the reception status of first signals.
(3) A wireless communication system according to one aspect of the present invention is the wireless communication system according to (2), wherein the transmitting device transmits first signals in an omnidirectional pattern.
(4) A wireless communication system according to one aspect of the present invention is the wireless communication system according to any one of (1) through (3), wherein each of a plurality of directional beams includes information to identify each directional beam and information to identify each directional antenna used to transmit each directional beam.
(5) A wireless communication system according to one aspect of the present invention is the wireless communication system according to any one of (1) to (4), wherein each of a plurality of directional antennas includes a plurality of antenna elements.
(6) A transmitting device according to one aspect of the present invention is a transmitting device equipped with a plurality of directional antennas, which includes a controller configured to control sequentially transmitting a plurality of directional beams to a receiving device via each of the plurality of directional antennas; and an antenna controller configured to control directivity for each of a plurality of directional antennas in order to transmit each of a plurality of directional beams. The controller sets the directivity for each directional beam to be transmitted to the receiving device with the antenna controller according to a response signal to a plurality of directional beams.
(7) A transmitting device according to one aspect of the present invention is the transmitting device according to (6), wherein the controller sequentially transmits first signals each including information representing the number of directional antennas and information representing a transmitting method of a plurality of directional beams to the receiving device via each of the plurality of directional antennas, thus controlling setting the transmitting method of a plurality of directional beams.
(8) A transmitting device according to one aspect of the present invention is the transmitting device according to (6) or (7), wherein the controller controls sequentially transmitting second signals each including information representing the number of directional antennas and information to identify each of a plurality of directional beams to the receiving device via each of a plurality of directional antennas.
(9) A transmitting device according to one aspect of the present invention is the transmitting device according to any one of (6) through (8), wherein the controller incorporates information to identify each directional antenna used to transmit each directional beam and information to identify each directional beam into each of a plurality of directional beams.
(10) A transmitting device according to one aspect of the present invention is the transmitting device according to any one of (6) through (9), wherein the controller controls transmits a third signal including information representing each directional antenna of the receiving device and information to identify an appropriate directional beam among a plurality of directional beams transmitted via each directional antenna.
(11) A receiving device according to one aspect of the present invention is a receiving device configured to wirelessly communicate with a transmitting device equipped with a plurality of directional antennas, which includes a wireless unit configured to sequentially receive a plurality of directional beams each having different directivity transmitted by the transmitting device via each of the plurality of directional antennas; and a controller configured to select one or more appropriate directional beams among a plurality of directional beams received by the wireless unit. The wireless unit transmits information representing the appropriate directional beam selected by the controller to the transmitting device.
(12) A receiving device according to one aspect of the present invention is the receiving device according to (11), wherein the controller controls transmitting a signal including information representing the number of directional antennas mounted on the transmitting device, information to identify each directional antenna, and information representing the reception status of each directional beam transmitted via each directional antenna.
(13) A communication method according to one aspect of the present invention is a communication method implemented by a transmitting device equipped with a plurality of directional antennas and a receiving device configured to wirelessly communicate with the transmitting device. The transmitting device sequentially transmits a plurality of directional beams each having different directivity to the receiving device via each of a plurality of directional antennas, thus setting directivity for each directional beam to be transmitted to the receiving device according to the response signal to a plurality of directional beams. The receiving device sequentially receives a plurality of directional beams so as to select one or more appropriate directional beams among a plurality of directional beams, thus notifying the transmitting device of information representing the selected directional beam.

### ADVANTAGEOUS EFFECTS OF INVENTION

According to the embodiments of the present invention, it is possible to carry out communication using directional beams between a transmitting device having multiple directional antennas and a receiving device having one or multiple directional antennas.

### BRIEF DESCRIPTION OF DRAWINGS

Fig. 1 is a block diagram showing a wireless communication system according to the first embodiment of the present invention.
Fig. 2 is a schematic diagram showing the first example of a communication method adapted to the wireless communication system according to the embodiment of the present invention.
Fig. 3 is a schematic diagram showing the second example of a communication method adapted to the wireless communication system according to the embodiment of the present invention.
Fig. 4 is a schematic diagram showing the third example of a communication method adapted to the wireless communication system according to the embodiment of the present invention.
Fig. 5 is a schematic diagram showing the fourth example of a communication method adapted to the wireless communication system according to the embodiment of the present invention.
Fig. 6 is a schematic diagram showing the fifth example of a communication method adapted to the wireless communication system according to the embodiment of the present invention.
Fig. 7 is a block diagram of a wireless base station device and a terminal device included in the wireless communication system according to the first embodiment.
Fig. 8 is a drawing showing one example of array communication capability information used for the wireless communication system according to the embodiment of the present invention.
Fig. 9 is a drawing showing one example of a directivity adjustment start signal used for the wireless communication system according to the embodiment of the present invention.
Fig. 10 is a drawing showing one example of a directivity adjustment signal used for the wireless communication system according to the embodiment of the present invention.
Fig. 11 is a drawing showing one example of a directivity adjustment feedback signal used for the wireless communication system according to the embodiment of the present invention.
Fig. 12 is a drawing showing one example of a directivity adjustment response signal used for the wireless communication system according to the embodiment of the present invention.
Fig. 13 is a diagram showing one operation example of the wireless communication system according to the embodiment of the present invention.
Fig. 14 is diagram showing a first setting example of directivity for the wireless communication system according to the embodiment of the present invention.
Fig. 15 is a diagram showing a second setting example of directivity for the wireless communication system according to the embodiment of the present invention.
Fig. 16 is a block diagram showing a wireless communication system according to the second embodiment of the present invention.
Fig. 17 is a diagram showing a first transmitting example of directional beams according to the embodiment of the present invention.
Fig. 18 is a diagram showing a second transmitting example of directional beams according to the embodiment of the present invention.
Fig. 19 is a diagram showing a third transmitting example of directional beams according to the embodiment of the present invention.

### DESCRIPTION OF EMBODIMENTS

Next, the embodiments of the present invention will be described with reference to the drawings. The embodiments described below are examples; hence, working examples adapted to the present invention are not necessarily limited to the following embodiments. In all the drawings used for the embodiments, various parts having the same functions are each denoted using the same reference sign, thus preventing the same description from being repeated.

### <First Embodiment>

### <Wireless Communication System>

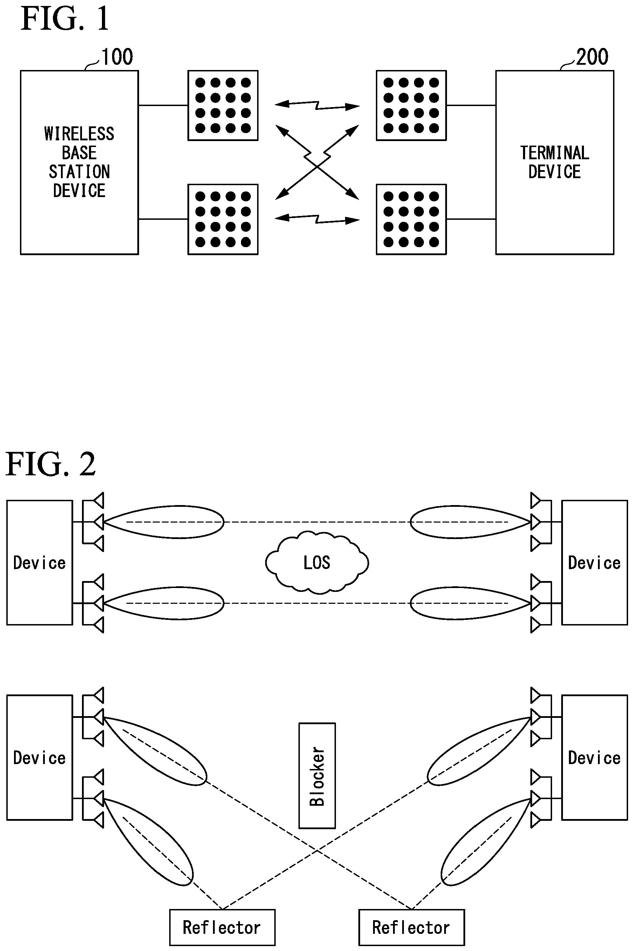

Fig. 1 shows one example of the wireless communication system according to the first embodiment of the present invention. The wireless communication system includes a wireless base station device 100 having directional antennas such as multiple array antennas, and a terminal device 200 having one or multiple array antennas used for wireless communication with the wireless base station device 100. Herein, an array antenna is an antenna unit for supplying electric power to multiple antenna elements (or radiating elements) regularly aligned according to excitation conditions.

As shown in Fig. 1, the wireless communication system of the present embodiment will be described with respect to the situation that the wireless base station device 100 and the terminal device 200 are each equipped with two antennas. Of course, it is possible to provide the wireless base station device 100 with three or more array antennas. Alternatively, it is possible to provide the terminal device 200 with a single array antenna or with three or more array antennas.

An example of radio waves to be transmitted or received between the wireless base station device 100 and the terminal device 200 may be radio waves of high frequencies of 30 GHz or more referred to as millimeter waves. Both the wireless base station device 100 and the terminal device 200 are configured to transmit directional beams via array antennas. High-frequency radio waves such as millimeter waves have a high degree of straight propagation, and therefore, directional beams having small widths of beams may be greatly attenuated in terms of transmission energy as they depart outwardly from their emitting directions. That is, it is possible to reduce radio interference effected by directional beams as they depart from their correct directions. For this reason, it is possible to broaden the space available for other radio communications, and therefore, it is possible to improve space availability efficiency. Directional beams may be formed by electrical delays between signals to be input to multiple antenna elements.

An antenna array includes multiple antenna elements aligned with intervals each corresponding to a half wavelength of the used radio frequency f [Hz] or more. That is, an interval between adjacent antennas can be represented by c/(2×f) or more. Herein, c denotes the speed of light (or the speed of radio waves). Accordingly, it is possible to reduce intervals between antenna elements as frequencies of transmitting radio waves become higher; hence, it is possible to reduce the required area irrespective of the increasing number of antenna elements.

### <Communication Method>

Some candidates of communication methods adapted to the wireless communication system according to the present embodiment will be described below.

### <Spatial Multiplexing>

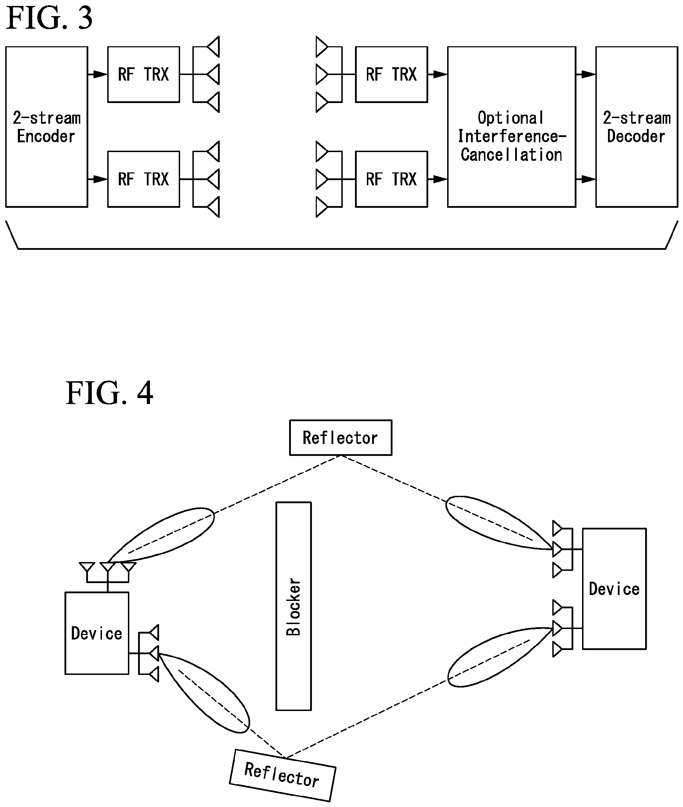

Fig. 2, Fig. 3, and Fig. 4 show an example of a communication method using spatial multiplexing. Fig. 2 shows Multi-Array Spatial Aggregation (hereinafter, referred to as "MA-SA"), wherein two devices are each equipped with two array antennas which are used to set propagation paths for two streams. Thus, it is possible to obtain double transmission capacity for communication between two devices. Fig. 3 shows an example of a communication method using spatial multiplexing, i.e. Spatial Aggregation (hereinafter, referred to as "SA"). Fig. 3 shows a subset of the communication method using spatial multiplexing shown in Fig. 2. Fig. 4 shows a subset of the communication method using spatial multiplexing shown in Fig. 2, in which reflectors are arranged on propagation paths between two devices.

### <Beam Forming>

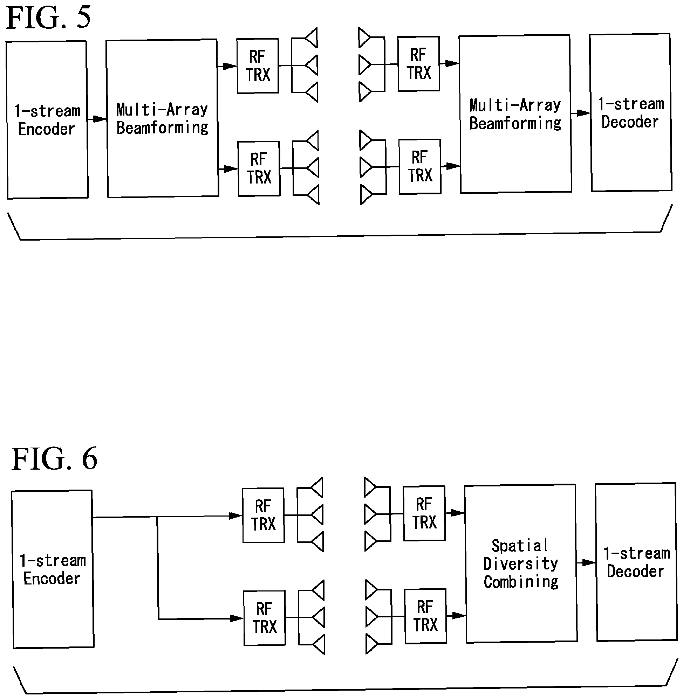

Fig. 5 shows one example of a communication method using beamforming. Fig. 5 shows multi-array beam forming (Multi-Array Beamforming (hereinafter, referred to as "MA-BF")), in which two antenna arrays are combined together for beamforming. Compared with a single array of antennas, it is possible to obtain an antenna gain.

### <Spatial Diversity>

Fig. 6 shows one example of a communication method using spatial diversity. Fig. 6 shows multi-array spatial diversity (Multi-Array Spatial Diversity (hereinafter, referred to as "MA-SD")).

One example of communication methods such as MA-SA and MA-SD applied to the wireless communication system of the present embodiment will be described below. However, it is possible to apply other communication methods, other than MS-SA and MA-SD, to the wireless communication system.

### <Process to start adjusting directivity>

The wireless base station device 100 sequentially transmits signals to start adjusting directivity (hereinafter, referred to as "directivity adjustment start signals") in omnidirectional patterns via multiple array antennas mounted on the wireless base station device 100.

Upon receiving directivity adjustment start signals transmitted by the wireless base station device 100, the terminal device 200 obtains reception status by measuring the quality of signals (hereinafter, referred to as "signal quality") such as a reception strength or a reception strength-to-noise ratio regarding directivity adjustment start signals, and then, the terminal device holds the reception status in connection with the information to identify an array antenna via which the wireless base station device 100 transmits a directivity adjustment start signal. The terminal device 200 feeds back a response signal to the directivity adjustment start signal to the wireless base station device 100. The response signal annexes the reception status of a directivity adjustment start signal transmitted by an array antenna to the information to identify each of multiple array antennas mounted on the wireless base station device 100.

### <Process to adjust directivity>

Upon receiving the response signal to the directivity adjustment start signal transmitted from the terminal device 200, the wireless base station device 100 transmits a signal to adjust directivity (hereinafter, referred to as "a directivity adjustment signal") by forming a directional beam via each of multiple array antennas. Upon receiving the directivity adjustment signal transmitted from the wireless base station device 100, the terminal device 200 measures reception strength or signal quality regarding the directivity adjustment signal. The terminal device 200 holds the information to identify an array antenna of the wireless base station device 100 used to transmit the directivity adjustment signal in connection with the information to identify the directivity adjustment signal. Upon completion of transmitting the directivity adjustment signal by the wireless base station device 100, the terminal device 200 transmits a directivity adjustment signal by forming a directional beam via each of multiple array antennas. The wireless base station device 100 receives the directivity adjustment signal transmitted by the terminal device 200. The wireless base station device 100 measures reception strength or signal quality regarding the directivity adjustment signal and thereby holds the information to identify the array antenna used to transmit the directivity adjustment signal in connection with the information to identify the directivity adjustment signal.

Upon completion of transmitting the directivity adjustment signal by the terminal device 200, the wireless base station device 100 selects a directivity adjustment signal having the highest reception strength or the highest signal quality among directivity adjustment signals held therein with respect to the information to identify each array antenna. The wireless base station device 100 transmits a feedback signal (hereinafter, referred to as "a directivity adjustment feedback signal") responsive to the directivity adjustment signal transmitted from the terminal device 200. The directivity adjustment feedback signal includes the information to identify a directivity adjustment signal having the highest reception strength or the highest signal quality, and the information to identify an array antenna of the terminal device 200 used to transmit the directivity adjustment signal.

Upon receiving the directivity adjustment signal transmitted from the wireless base station device 100, the terminal device 200 selects a directivity adjustment signal having the highest reception strength or the highest signal quality among directivity adjustment signal held therein. The terminal device 200 determines and sets a directional pattern to transmit a directivity adjustment feedback signal via each array antenna based on the information to identify a directivity adjustment signal having the highest reception strength or the highest signal quality and the information to identify an array antenna of the terminal device 200 used to transmit the directivity adjustment signal, both of which are included in the directivity adjustment feedback signal transmitted by the wireless base station device 100.

Upon receiving the directivity adjustment feedback signal transmitted from the terminal device 200, the wireless base station device 100 determines a directional pattern used to transmit a response signal to a directivity adjustment signal for each array antenna based on the information to identify the directivity adjustment signal having the highest reception strength or the highest signal quality and the information to identify an array antenna of the wireless base station device 100 used to transmit the directivity adjustment signal, both of which are included in the directivity adjustment feedback signal. The wireless base station device 100 determines and sets the directional pattern for each of multiple array antennas. Upon determining and setting the directional pattern for each of multiple array antennas, the wireless base station device 100 transmits a signal to confirm directivity to the terminal device 200 via each of multiple array antennas (hereinafter, referred to "a confirmation signal"). Upon receiving the confirmation signal transmitted from the wireless base station device 100, the terminal device 200 transmits a signal to confirm directivity to the wireless base station device 100 via each of multiple array antennas (hereinafter, referred to as "a confirmation signal"). This completes the setting of the directivity for each array antenna in communication between the wireless base station device 100 and the terminal device 200.

Hereinafter, the wireless base station device 100 and the terminal device 200 will be described in detail.

### <Wireless Base Station Device>

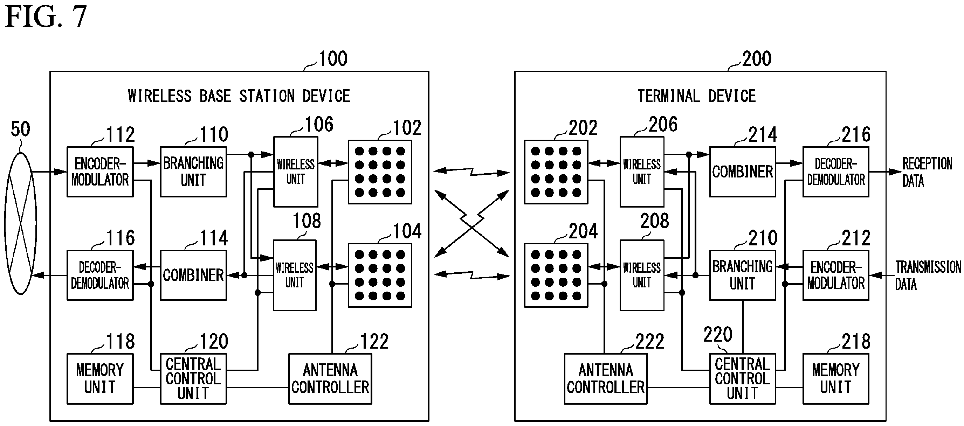

Fig. 7 shows an example of a wireless base station device and a terminal device included in the wireless communication system of the present embodiment. The wireless base station device 100 of the present embodiment includes an array antenna 102, an array antenna 104, a wireless unit 106, a wireless unit 108, a branching unit 110, an encoder-modulator 112, a combiner 114, a decoder-demodulator 116, a memory unit 118, a central control unit 120, and an antenna controller 122.

The encoder-modulator 112 is connected to a network 50 such as the Internet by radio or by wire, while the decoder-demodulator 116 is connected to the network 50 by radio or by wire.

The encoder-modulator 112 carries out an encoding process and a modulation process for data supplied thereto through the network 50, and then, the encoder-modulator 112 converts data in the signal format suitable to conversion into wireless signals in the latter part of the circuitry. In addition, the encoder-modulator 112 carries out an encoding process and a modulation process with respect to a management signal for controlling wireless networks under the wireless base station device 100 and a control signal for controlling wireless networks. The encoder-modulator 112 sends to the branching unit 110 the management signal, the control signal, and the converted data conformed to the signal format suitable to conversion into wireless signals in the latter part of the circuitry.

The branching unit 110 is connected to the encoder-modulator 112. The branching unit 110 divides signals supplied thereto from the encoder-modulator 112 by the number of array antennas. Fig. 7 shows an example of circuitry in which the number of array antennas is two; hence, the branching unit 110 divides a signal having a wireless format into two signals, and therefore, the divided signals are supplied to the wireless units 106 and 108. At this time, the branching method dependent on the communication method of the terminal device 200 may supply different signals to different array antennas for the purpose of MA-SA or the same signal to different array antennas for the purpose of MA-SD.

The wireless units 106 and 108 are connected to the branching unit 110. The wireless units 106 and 108 convert signals supplied thereto from the branching unit 110 into high-frequency signals. Then, the wireless unit 106 sends high-frequency signals to the array antenna 102 while the wireless unit 108 sends high-frequency signals to the array antenna 104. The wireless unit 106 converts high-frequency signals, which are supplied thereto from the array antenna 102, in the signal format representing the frequency suitable to transfer to the combiner 114, and then, it sends the formatted signals to the combiner 114. The wireless unit 108 converts high-frequency signals, which are supplied thereto from the array antenna 104, in the signal format representing the frequency suitable to transfer to the combiner 114, and then, it sends the formatted signals to the combiner 114.

The array antenna 102 is connected to the wireless unit 106 while the array antenna 104 is connected to the wireless unit 108. The array antenna 102 transmits high-frequency signals supplied thereto from the wireless unit 106 while the array antenna 104 transmits high-frequency signals supplied thereto from the wireless unit 108. In addition, the array antenna 102 receives wireless signals transmitted by the terminal device 200 so as to send wireless signals to the wireless unit 106. The array antenna 104 receives wireless signals transmitted by the terminal device 200 so as to send wireless signals to the wireless unit 108.

The combiner 114 is connected to the wireless units 106 and 108. The combiner 114 combines signals supplied thereto from the wireless unit 106 and signals supplied thereto from the wireless unit 108. The combiner 114 produces composite signals by combining signals of the wireless unit 106 and signals of the wireless unit 108, thus sending composite signals to the decoder-demodulator 116. At this time, the combining method of the combiner 114 may depend on the communication method of the terminal device 200.

The decoder-demodulator 116 is connected to the combiner 114. The decoder-demodulator 116 carries out a decoding process and a demodulation process for composite signals supplied thereto from the combiner 114 so as to restore original digital signals transmitted by the terminal device 200. The decoder-demodulator 116 sends the restored digital signals to the network 50 or the central control unit 120.

The antenna controller 122 is connected to the array antennas 102 and 104. The antenna controller 122 controls the directivity of directional beams to be transmitted by the array antennas 102 and 104 dependent on the result of coordination with the terminal device 200 serving as a communication partner of the wireless base station device 100. In addition, the antenna controller 122 controls the directivity of the array antennas 102 and 104 to receive signals transmitted by the terminal device 200 dependent on the result of coordination with the terminal device 200 serving as a communication peer.

The central control unit 120 is connected to the encoder-modulator 112, the decoder-demodulator 116, the wireless unit 106, the wireless unit 108, and the antenna controller 122. The central control unit 120 controls the encoder-modulator 112, the decoder-demodulator 116, the wireless unit 106, and the wireless unit 108 in the wireless base station device 100. In addition, the central control unit 120 sends control signals to the antenna controller 122 so as to control the array antennas 102 and 104. The central control unit 120 generates and sends beacon signals to the encoder-modulator 112. The encoder-modulator 112 carries out an encoding process and a modulation process for beacon signals.

When a probe request transmitted by the terminal device 200 is supplied to the central control unit 120 via the decoder-demodulator 116, the central control unit 120 generates a probe response to the probe request and then sends the probe response to the encoder-modulator 112. The encoder-modulator 112 carries out an encoding process and a modulation process for the probe response. For example, the central control unit 120 generates a beacon signal including the array communication capability information of the wireless base station device 100 and then sends the beacon signal to the encoder-modulator 112. Alternatively, the central control unit 120 generates a probe response including the array communication capability information of the wireless base station device 100 and then sends the probe response to the encoder-modulator 112.

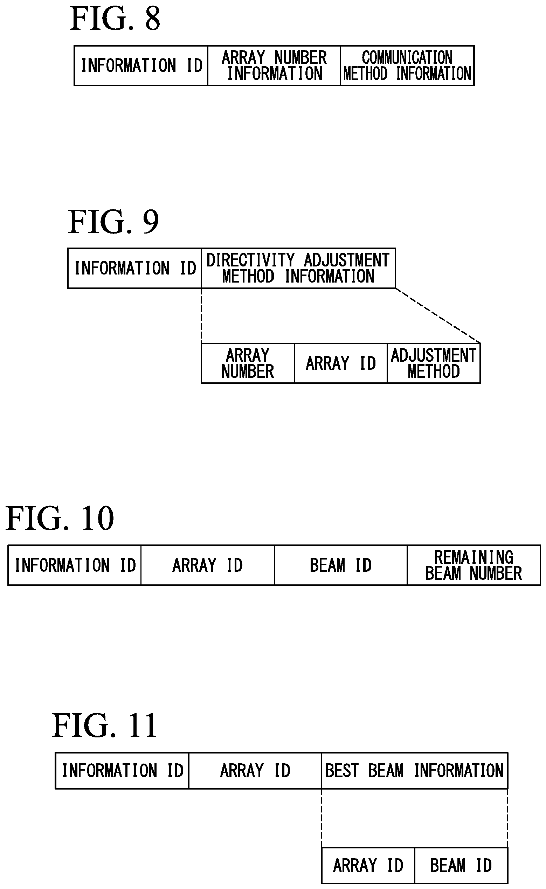

Fig. 8 shows an example of array communication capability information. For example, the array communication capability information is realized using a MAC frame, which includes information to identify information (i.e. an information ID), information representing the number of array antennas (i.e. array number information), and information representing an applicable communication method (i.e. communication method information).

In the above, the information representing the array communication capability information is annexed to the information ID, while "2" representing the number of array antennas mounted on the wireless base station device 100 is annexed to the array number information. In addition, the information representing the MA-SA and the information representing the MA-SD are annexed to the communication method information. The central control unit 120 generates and sends a directivity adjustment start signal to the encoder-modulator 112.

Fig. 9 shows an example of the directivity adjustment start signal. The directivity adjustment start signal includes an information ID and information representing a directivity adjustment method (i.e. directivity adjustment method information). In addition, the directivity adjustment method information includes the information representing the number of array antennas (i.e. an array number), the information to identify each array antenna, and the information representing an adjustment method (i.e. an adjustment method). Herein, the information representing a directivity adjustment start signal is annexed to the information to identify the information.

In the above, "2" representing the number of array antennas mounted on the wireless base station device 100 is annexed to the array number. In addition, "1" or "2" is annexed to an array ID when each array antenna transmits a directivity adjustment start signal. Herein, "1" denotes the array antenna 102 while "2" denotes the array antenna 104. Similar comment can be made below. That is, the adjustment method is the information representing an end of transmission of a directivity adjustment start signal with the wireless base station device 100 when the information representing the number of array antennas matches the information to identify an array antenna currently transmitting the directivity adjustment start signal. That is, the transmission of a directivity adjustment start signal will be terminated when the number of array antennas, i.e. "2", matches the information "2" to identify an array antenna currently transmitting the directivity adjustment start signal.

The central control unit 120 generates and sends a directivity adjustment start signal to the encoder-modulator 112.

Fig. 10 shows an example of a directivity adjustment signal. The directivity adjustment signal includes an information ID, an array ID, information to identify a directional beam (i.e. a beam ID), and information representing the remaining number of beams to be transmitted by each array antenna (i.e. a remaining beam number). Herein, the information representing the directivity adjustment signal is annexed to the information ID. In addition, "1" or "2" is set to the array ID when each array antenna transmits a directivity adjustment start signal. The beam ID designates the information to identify a directional beam used to transmit a directivity adjustment signal. The remaining beam number is a numerical value which is produced by subtracting the number of directional beams already transmitted by array antennas from the total number of directional beams to be transmitted by array antennas. For example, the following description refers to the situation that the array antenna 102 forms M types of directional beams (where M is an integer, i.e. M>1). The array antenna 102 transmits (or sector-sweeps) directivity adjustment signals using directional beams in an order of beam IDs counted from 1 to M. In this case, the information representing the remaining number of directional beams to be transmitted by each array antenna will be sequentially designated in the order of "M-1", "M-2",..., 1, 0.

The central control unit 120 generates and sends a directivity adjustment feedback signal to the encoder-modulator 112.

Fig. 11 shows an example of a directivity adjustment feedback signal. The directivity adjustment feedback signal includes an information ID, an array ID, and the information representing a directivity adjustment signal having the highest reception strength or the highest signal quality (i.e. best beam information). In addition, the best beam information further includes an array ID and a beam ID.

The memory unit 118 is connected to the central control unit 120. The memory unit 118 stores control information such as the information representing directivity regarding each of the array antennas 102 and 104 used for each terminal device serving as a communication partner. Returning back to Fig. 7, detailed descriptions will be continued below.

### <Terminal Device>

The terminal device 200 of the present embodiment includes an array antenna 202, an array antenna 204, a wireless unit 206, a wireless unit 208, a branching unit 210, an encoder-modulator 212, a combiner 214, a decoder-demodulator 216, a memory unit 218, a central control unit 220, and an antenna controller 222.

The encoder-modulator 212 carries out an encoding process and a modulation process for transmission data and thereby converts transmission data into signals suitable to a wireless format in the latter part of the circuitry. The encoder-modulator 212 sends transmission data, i.e. signals already converted in the wireless format, to the branching unit 210.

The branching unit 210 is connected to the encoder-modulator 212. The branching unit 210 divides the transmission data having the wireless format, which are supplied thereto from the encoder-modulator 212, into multiple data corresponding to the number of array antennas. Fig. 7 shows an example that the number of array antennas is two, wherein the branching unit 210 divides the wireless-format transmission data into two sets of transmission data, and therefore, the divided wireless-format transmission data are sent to the wireless units 206 and 208. According to the branching method dependent on the communication method with the wireless base station device 100, it is possible to supply different signals to different array antennas for the purpose of MA-SA, or it is possible to supply the same signal to different array antennas for the purpose of MA-SD.

The wireless units 206 and 208 are connected to the branching unit 210. The wireless units 206 and 208 converts the formatted transmission data, which are supplied thereto from the branching unit 210, into high-frequency signals. Then, the wireless unit 206 sends high-frequency signals to the array antenna 202 while the wireless unit 208 sends high-frequency signals to the array antenna 204. In addition, the wireless unit 206 converts high-frequency signals, which are supplied thereto from the array antenna 202, into wireless-format signals and thereby sends wireless-format signals to the combiner 214. The wireless unit 208 converts high-frequency signals, which are supplied thereto from the array antenna 204, into signals having the format representing the frequency suitable to transfer to the combiner 214 and thereby sends those signals to the combiner 214.

The array antenna 202 is connected to the wireless unit 206 while the array antenna 204 is connected to the wireless unit 208. The array antenna 202 transmits high-frequency signals supplied thereto from the wireless unit 206 while the array antenna 204 transmits high-frequency signals supplied thereto from the wireless unit 208. In addition, the array antenna 202 receives wireless signals, which are transmitted by the wireless base station device 100, and thereby sends wireless signals to the wireless unit 206. The array antenna 204 receives wireless signals, which are transmitted by the wireless base station device 100, and then sends wireless signals to the wireless unit 208.

The combiner 214 is connected to the wireless units 206 and 208. The combiner 214 combines signals having the format supplied with the wireless unit 206 and signals having the format supplied with the wireless unit 208. The combiner 214 produces composite signals by combining signals having the wireless format supplied with the wireless unit 206 and signals having the wireless format supplied with the wireless unit 208, thus sending composite signals to the decoder-demodulator 216. At this time, the combining method of the combiner 214 depends on the communication method with the wireless base station device 100.

The decoder-demodulator 216 is connected to the combiner 214. The decoder-demodulator 216 carries out a decoding process and a demodulation process for composite signals supplied thereto from the combiner 214. The decoder-demodulator 216 produces and sends data, which are obtained through the decoding process and the demodulation process for composite signals supplied thereto from the combiner 214, to the central control unit 220. Alternatively, the decoder-demodulator 216 may sends data to a PC connected to the terminal device 200 as its latter circuitry.

The antenna controller 222 is connected to the array antennas 202 and 204. The antenna controller 222 controls directivity of directional beams to be transmitted by the arran antennas 202 and 204 dependent on the result of coordination with the wireless base station device 100 serving as a communication partner. In addition, the antenna controller 222 controls directions of the array antennas 202 and 204 dependent on the result of coordination with the wireless base station device 100 serving as a communication peer and thereby receives signals transmitted by the wireless base station device 100.

The central control unit 220 is connected to the encoder-modulator 212, the decoder-demodulator 216, the wireless unit 206, the wireless unit 208, and the antenna controller 222. The central control unit 220 controls the encoder-modulator 212, the decoder-demodulator 216, the wireless unit 206, the wireless unit 208, and the antenna controller 222. The central control unit 220 generates a probe request for the purpose of searching the wireless base station device 100 and thereby sends the probe request to the encoder-modulator 212. For example, the central control unit 220 generates a probe request including the array communication capability information of the terminal device 200 and thereby sends the probe request to the encoder-modulator 212. An example shown in Fig. 8 can be applied to the array communication capability information.

The central control unit 220 generates and sends a directivity adjustment start signal to the encoder-modulator 212. An example shown in Fig. 9 can be applied to the directivity adjustment start signal. In addition, the central control unit 220 generates a response signal to the directivity adjustment start signal (i.e. a directivity adjustment response signal) and thereby sends the response signal to the encoder-modulator 212.

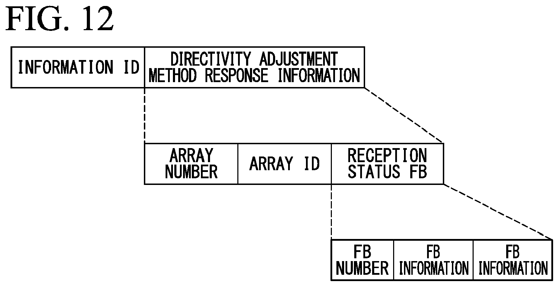

Fig. 12 shows an example of the directivity adjustment response signal. The directivity adjustment response signal includes an information ID, and a directivity adjustment method response signal. The directivity adjustment method response signal further includes an array number, an array ID, and feedback information (i.e. reception status FB) representing the reception status of the directivity adjustment start signal transmitted by the wireless base station device 100.

The feedback information includes information (i.e. FB number) representing the number of reception statuses being fed back, and information (FB information) representing the reception status. The central control unit 220 generates and sends a directivity adjustment signal to the encoder-modulator 212. An example shown in Fig. 10 can be applied to the directivity adjustment signal.

The central control unit 220 generates and sends a directivity adjustment feedback signal to the encoder-modulator 212. An example shown in Fig. 11 can be applied to the directivity adjustment feedback signal.

The memory unit 218 is connected to the central control unit 220. The memory unit 218 stores control information such as the information representing the directivity of each of the array antennas 202 and 204 to be used for each wireless base station device 100 serving as a communication peer.

### <Operation of wireless communication system>

The operation of the wireless communication system will be described below. For example, the following description will be made with respect to the situation that the wireless base station device 100 is able to transmit M directional beams (where M is an integer, M>1) via array antennas while the terminal device 200 is able to transmit N directional beams (where N is an integer, N>0) via array antennas.

### <Operation for detecting each device and for determining a communication method>

Prior to establishing wireless connections, the wireless base station device 100 and the terminal device 200 mutually detect their existence. For example, the terminal device 200 transmits a probe request including array communication capability information of the terminal device 200. Upon receiving the probe request, the wireless base station device 100 detects the existence of the terminal device 200. Subsequently, the wireless base station device 100 transmits (or unicasts) a probe response including the array communication capability information of the wireless base station device 100.

Upon receiving the probe response, the terminal device 200 detects the existence of the wireless base station device 100. Upon detecting the terminal device 200, the central control unit 120 of the wireless base station device 100 determines a communication method to be used for communication with the terminal device 200 based on the array communication capability information of the wireless base station device 100 and the array communication capability information of the terminal device 200.

The wireless base station device 100 notifies (or broadcasts) a beacon signal including the array communication capability information of the wireless base station device 100. For example, the wireless base station device 100 incorporates the array communication capability information of the wireless base station device 100 into a frame body of a beacon signal.

The terminal device 200 may detect the wireless base station device 100 by receiving the beacon signal. Upon receiving the beacon signal, the terminal device 200 transmits a response signal to the beacon signal including the array communication capability information of the terminal device 200. The wireless base station device 100 detects the terminal device 200 by receiving the response signal.

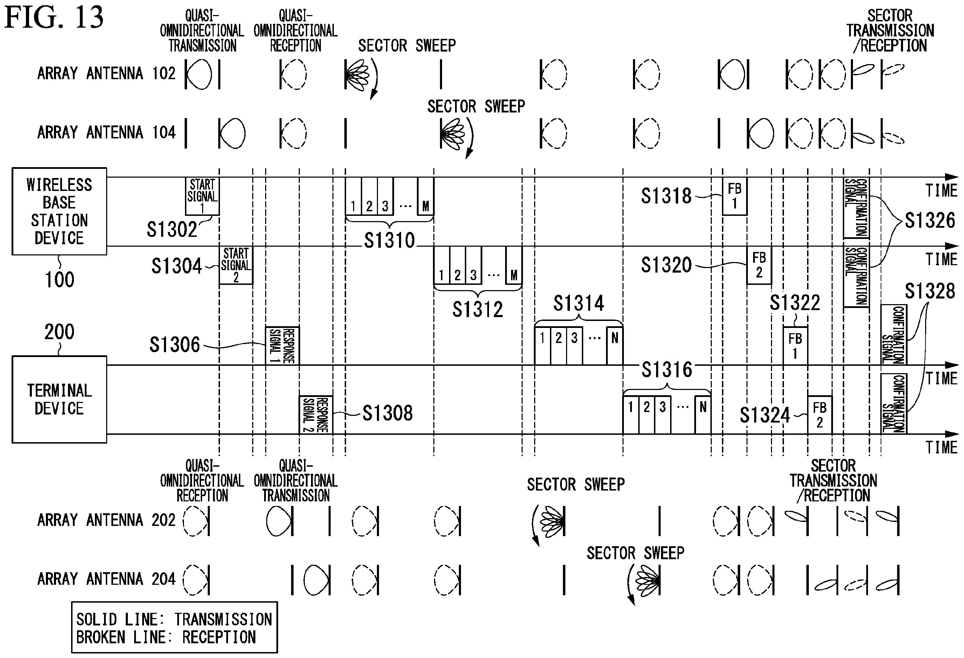

Fig. 13 is a diagram showing the operation of the wireless communication system of the present embodiment.

### <Process to start adjustment of directivity>

In step S1302, the wireless base station device 100 generates a directivity adjustment start signal with the central control unit 120. In the wireless base station device 100, the encoder-modulator 112 processes the directivity adjustment start signal; the branching unit 110 sends the directivity adjustment start signal to the wireless unit 106; the wireless unit 106 converts the directivity adjustment start signal into a high-frequency signal; and then, the high-frequency signal is transmitted in an omnidirectional pattern (or a quasi-omnidirectional pattern) via the array antenna 102.

When the terminal device 200 receives a directivity adjustment start signal transmitted by the wireless base station device 100 in an omnidirectional pattern (or a quasi-omnidirectional pattern) via the array antennas 202 and 204, the terminal device 200 obtains the reception status by measuring the reception strength or the signal quality of the directivity adjustment start signal and thereby stores the reception status in connection with the information to identify the array antenna 102 used to transmit the directivity adjustment start signal.

In step S1304, the wireless base station device 100 generates a directivity adjustment start signal with the central control unit 120. In the wireless base station device 100, the encoder-modulator 112 processes the directivity adjustment start signal; the branching unit 110 sends the directivity adjustment start signal to the wireless unit 108; the wireless unit 108 converts the directivity adjustment start signal into a high-frequency signal; and then, the high-frequency signal is transmitted in an omnidirectional pattern via the array antenna 104.

When the terminal device 200 receives the directivity adjustment start signal transmitted by the wireless base station device 100 in an omnidirectional pattern via the array antennas 202 and 204, the terminal device 200 obtains the reception status by measuring the reception strength or the signal quality of the directivity adjustment start signal and thereby stores the reception status in connection with the information to identify the array antenna 104 used to transmit the directivity adjustment start signal. The terminal device 200 determines that no directivity adjustment start signal will be transmitted after the directivity adjustment start signal since the information representing the number of array antennas annexed to the directivity adjustment start signal matches the information to identify the array antenna.

In step S1306, the terminal device 200 generates a directivity adjustment response signal with the central control unit 220. In the terminal device 200, the encoder-modulator 212 processes the directivity adjustment start signal; the branching unit 210 sends the directivity adjustment start signal to the wireless unit 206; the wireless unit 206 converts the directivity adjustment start signal into a high-frequency signal; and then, the high-frequency signal is fed back to the wireless base station device 100 in an omnidirectional pattern via the array antenna 202.

The wireless base station device 100 receives a directivity adjustment response signal transmitted via the array antenna 202 of the terminal device 200. Accordingly, the wireless base station device 100 is able to confirm the reception status of the terminal device 200 when the wireless base station device 100 transmits signals in an omnidirectional pattern via the array antenna 102.

In step S1308, the terminal device 200 generates a directivity adjustment response signal with the central control unit 220. In the terminal device 200, the encoder-modulator 212 processes the directivity adjustment response signal; the branching unit 210 sends the directivity adjustment response signal to the wireless unit 208; the wireless unit 208 converts the directivity adjustment response signal to a high-frequency signal; and then, the high-frequency signal is fed back to the wireless base station device 100 in an omnidirectional pattern via the array antenna 204.

The wireless base station device 100 receives the directivity adjustment response signal transmitted via the array antenna 204 of the terminal device 200. Accordingly, the wireless base station device 100 is able to confirm the reception status of the terminal device 200 when the wireless base station device 100 transmits signals in an omnidirectional pattern via the array antenna 104.

### <Process to adjust directivity>

The wireless communication system of the present embodiment includes a wireless base station device equipped with two array antennas and a terminal device equipped with two array antennas. For this reason, it is necessary to carry out a 2×2 adjustment process between two sets of two array antennas.

In step S1310, the wireless base station device 100 generates a directivity adjustment signal with the central control unit 120. In the wireless base station device 100, the encoder-modulator 112 processes the directivity adjustment signal; the branching unit 110 sends the directivity adjustment signal to the wireless unit 106; the wireless unit 106 converts the directivity adjustment signal into a high-frequency signal; and then, high-frequency signals are sequentially transmitted via the array antenna 102 by sector-sweeping M directional beams each having different directivity.

The terminal device 200 receives the directivity adjustment signal transmitted by the wireless base station device 100 in an omnidirectional pattern via the array antennas 202 and 204. The terminal device 200 measures the reception strength or the signal quality of the directivity adjustment signal via the array antennas 202 and 204 which are each subjected to an omnidirectional pattern by means of the antenna controller 222. The antenna controller 222 sends the information representing the reception strength or the signal quality of the directivity adjustment signal to the central control unit 220. The central control unit 220 stores the information representing the reception strength or the signal quality of the directivity adjustment signal, which is supplied thereto from the antenna controller 222, on the memory unit 2218 in connection with the information to identify an array antenna of the wireless base station device 100 used to transmit the directivity adjustment signal and the information to identify the directivity adjustment signal.

In step S1312, the wireless base station device 100 generates a directivity adjustment signal with the central control unit 120. In the wireless base station device 100, the encoder-modulator 112 processes the directivity adjustment signal; the branching unit 110 sends the directivity adjustment signal to the wireless unit 108; the wireless unit 108 converts the directivity adjustment signal into a high-frequency signal; and then, high-frequency signals are sequentially transmitted via the array antenna 104 by sector-sweeping M directional beams each having different directivity.

The terminal device 200 receives a directivity adjustment signal transmitted by the wireless base station device 100 in an omnidirectional pattern via the array antennas 202 and 204. The terminal device 200 measures the reception strength or the signal quality of the directivity adjustment signal via the array antennas 202 and 204, which are each subjected to an omnidirectional pattern by means of the antenna controller 222. The antenna controller 222 sends the information representing the reception strength or the signal quality of the directivity adjustment signal to the central control unit 220. The central control unit 220 stores the information representing the reception strength or the signal quality of the directivity adjustment signal, which is supplied thereto from the antenna controller 222, on the memory unit 218 in connection with the information to identify an array antenna of the wireless base station device 100 used to transmit the directivity adjustment signal and the information to identify the directivity adjustment signal.

In step S1314, the terminal device 200 generates a directivity adjustment signal with the central control unit 220. In the terminal device 200, the encoder-modulator 212 processes the directivity adjustment signal; the branching unit 210 sends the directivity adjustment signal to the wireless unit 206; the wireless unit 206 converts the directivity adjustment signal to a high-frequency signal; and then, high-frequency signals are sequentially transmitted by sector-sweeping N directional beams each having different directivity via the array antenna 202.

The wireless base station device 100 receives the directivity adjustment signal transmitted by the terminal device 200 via the array antennas 102 and 104. The wireless base station device 100 measures the reception strength or the signal quality of the directivity adjustment signal via the array antennas 102 and 104, which are each subjected to an omnidirectional pattern by means of the antenna controller 122. The antenna controller 122 sends the information representing the reception strength or the signal quality of the directivity adjustment signal to the central control unit 120. The central control unit 120 stores the information representing the reception strength or the signal quality of the directivity adjustment signal, which is supplied thereto from the antenna controller 122, on the memory unit 118 in connection with the information to identity an array antenna of the terminal device 200 used to transmit the directivity adjustment signal and the information to identify the directivity adjustment signal.

In step S1316, the terminal device 200 generates a directivity adjustment signal with the central control unit 220. In the terminal device 200, the encoder-modulator 212 processes the directivity adjustment signal; the branching unit 210 sends the directivity adjustment signal to the wireless unit 208; the wireless unit 208 converts the directivity adjustment signal to a high-frequency signal; and then, high-frequency signals are sequentially transmitted by sector-sweeping N directional beams each having different directivity via the array antenna 204.

The wireless base station device 100 receives the directivity adjustment signal transmitted by the terminal device 200 in an omnidirectional pattern via the array antennas 102 and 104. The wireless base station device 100 measures the reception strength or the signal quality of the directivity adjustment signal via the array antennas 102 and 104, which are each subjected to an omnidirectional pattern by means of the antenna controller 122. The antenna controller 122 sends the information representing the reception strength of the directivity adjustment signal to the central control unit 122. The central control unit 120 stores the information representing the reception strength or the signal quality of the directivity adjustment signal, which is supplied thereto from the antenna controller 122, on the memory unit 118 in connection with the information to identify an array antenna of the terminal device 200 used to transmit the directivity adjustment signal and the information to identify the directivity adjustment signal.

In step S1318, the central control unit 120 of the wireless base station device 100 selects a directivity adjustment signal having the highest reception strength or the highest signal quality among directivity adjustment signals in connection with the information to identify the array antenna 202 of the terminal device 200 held on the memory unit 118. Subsequently, the wireless base station device 100 generates a directivity adjustment feedback signal with the central control unit 120.

In the wireless base station device 100, the encoder-modulator 112 processes the directivity adjustment feedback signal; the branching unit 110 sends the directivity adjustment feedback signal to the wireless unit 106; the wireless unit 106 converts the directivity adjustment feedback signal to a high-frequency signal; and then, the high-frequency signal is transmitted in an omnidirectional pattern via the array antenna 102. The terminal device 200 receives the directivity adjustment feedback signal transmitted by the wireless base station device 100 in an omnidirectional pattern via the array antennas 102 and 104. The terminal device 200 sets the directivity of directional beams transmitted via the array antenna 202 based on the information to identify the directivity annexed to the directivity adjustment feedback signal with the antenna controller 222. Accordingly, the terminal device 200 is able to set the directivity used to transmit directional beams to the wireless base station device 100 via the array antenna 202.

In step S1320, the central control unit 120 of the wireless base station device 100 selects a directivity adjustment signal having the highest reception strength or the highest signal quality among directivity adjustment signals in connection with the information to identify the array antenna 204 of the terminal device 200 held on the memory unit 118. Subsequently, the wireless base station device 100 generates a directivity adjustment feedback signal with the central control unit 120. In the wireless base station device 100, the encoder-modulator 112 processes the directivity adjustment feedback signal; the branching unit 110 sends the directivity adjustment feedback signal to the wireless unit 108; the wireless unit 108 converts the directivity adjustment feedback signal to a high-frequency signal; and then, the high-frequency signal is transmitted in an omnidirectional pattern via the array antenna 104.

The terminal device 200 receives the directivity adjustment feedback signal transmitted by the wireless base station device 100 in an omnidirectional pattern via the array antennas 102 and 104. The terminal device 200 sets the directivity of directional beams transmitted via the array antenna 204 based on the information to identify the directivity annexed to the directivity adjustment feedback signal by means of the antenna controller 222. Accordingly, the terminal device 200 is able to set the directivity of directional beams transmitted to the wireless base station device 100 via the array antenna 204.

In step S 1322, the central control unit 220 of the terminal device 200 selects a directivity adjustment signal having the highest reception strength or the highest signal quality among directivity adjustment signals in connection with the information to identify the array antenna 102 of the wireless base station device 100 held on the memory unit 218. Subsequently, the terminal device 200 generates a directivity adjustment feedback signal with the central control unit 220. In the terminal device 200, the encoder-modulator 212 processes the directivity adjustment feedback signal; the branching unit 210 sends the directivity adjustment feedback signal to the wireless unit 206; the wireless unit 206 converts the directivity adjustment feedback signal to a high-frequency signal; and then, the high-frequency signal is transmitted via the array antenna 202 in a directional pattern which is set in step S 1318.

The wireless base station device 100 receives the directivity adjustment feedback signal transmitted by the terminal device 200 in an omnidirectional pattern via the array antennas 202 and 204. The wireless base station device 100 sets the directivity of directional beams to be transmitted via the array antenna 102 based on the information to identify the directivity annexed to the directivity adjustment feedback signal with the antenna controller 122. Accordingly, the wireless base station device 100 is able to set the directivity used to transmit directional beams to the terminal device 200 via the array antenna 102.

In step S 1324, the central control unit 220 of the terminal device 200 selects a directivity adjustment signal having the highest reception strength or the highest signal quality among directivity adjustment signals in connection with the information to identify the array antenna 104 of the wireless base station device 100 held on the memory unit 218. Subsequently, the terminal device 200 generates a directivity adjustment feedback signal with the central control unit 220. In the terminal device 200, the encoder-modulator 212 processes the directivity adjustment feedback signal; the branching unit 210 sends the directivity adjustment feedback signal to the wireless unit 206; the wireless unit 206 converts the directivity adjustment feedback signal to a high-frequency signal; and then, the high-frequency signal is transmitted via the array antenna 202 in an omnidirectional pattern which is set in step S1320.

The wireless base station device 100 receives the directivity adjustment feedback signal transmitted by the terminal device 200 in an omnidirectional pattern via the array antennas 202 and 204. The wireless base station device 100 sets the directivity of directional beams to be transmitted via the array antenna 104 based on the information to identify the directivity annexed to the directivity adjustment feedback signal with the antenna controller 122. Accordingly, the wireless base station device 100 is able to set the directivity of directional beams to be transmitted to the terminal device 200 via the array antenna 104.

In step S1326, the wireless bases station device 100 generates a confirmation signal with the central control unit 120. In the wireless base station device 100, the encoder-modulator 112 processes the confirmation signal; the branching unit 110 sends the confirmation signal to the wireless units 106 and 108; the wireless units 106 and 108 convert the confirmation signal to a high-frequency signal; and then, the high-frequency signal is transmitted via the array antenna 102 in a directional pattern which is set in step S1322 and also transmitted via the array antenna 104 in a directional pattern which is set in step S1324. The terminal device 200 receives the confirmation signal transmitted by the wireless base station device 100.

In step S1328, the terminal device 200 generates a confirmation signal with the central control unit 220. In the terminal device 200, the encoder-modulator 112 processes the confirmation signal; the branching unit 210 sends the confirmation signal to the wireless units 206 and 208; the wireless units 206 and 208 converts the confirmation signal to a high-frequency signal; and then, the high-frequency signal is transmitted via the array antenna 202 in a directional pattern which is set in step S1324 and also transmitted via the array antenna 204 in a directional pattern which is set in step S1326. The wireless base station device 100 receives the confirmation signal transmitted by the terminal device 200. Accordingly, it is possible to complete adjusting the directivity of array antennas in communication between the wireless base station device 100 and the terminal device 200.

### <First setting example of directivity>

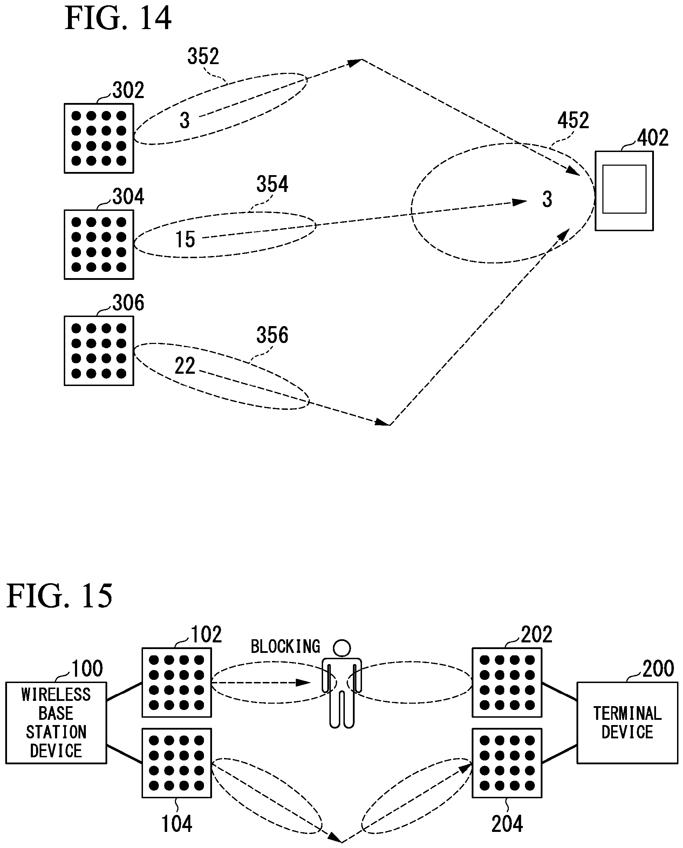

Fig. 14 shows an example of directional beams which are set by adjusting the directivity of array antennas in the wireless communication system of the present embodiment. Fig. 14 shows the situation for adjusting directivity in communication between a wireless base station including three array antennas, i.e. an array antenna 302, an array antenna 304, and an array antenna 306, and a terminal device including a single array antenna 402. Fig. 14 shows array antennas alone while omitting other parts than array antennas. The array antenna 302 forms a directional beam 352 designated by the information "3" to identify the directional beam; the array antenna 304 forms a directional beam 354 designated by the information "15" to identify the directional beam; the array antenna 306 forms a directional beam 356 designated by the information "22" to identify the directional beam.

Before setting directivity with the wireless base station device, the terminal device selects a directivity adjustment signal having the highest reception strength or the highest signal quality among directivity adjustment signals transmitted by each of the array antennas 302, 304, and 306. Thereafter, the terminal device transmits a directivity adjustment feedback signal annexed to the information to identify the directivity of the directivity adjustment signal having the highest reception strength or the highest signal quality. In this example, the terminal device designates "3", which represents the information to identify the directivity of the directivity adjustment signal having the highest reception strength or the highest signal quality, to the directivity adjustment feedback signal responsive to the directivity adjustment signal transmitted by the array antenna 302. In addition, the terminal device designates "15", which represents the information to identify the directivity of the directivity adjustment signal having the highest reception strength or the highest signal quality, to the directivity adjustment feedback signal responsive to the directivity adjustment signal transmitted by the array antenna 304. Moreover, the terminal device designates "22", which represents the information to identify the directivity of the directivity adjustment signal having the highest reception strength or the highest signal quality, to the directivity adjustment feedback signal responsive to the directivity adjustment signal transmitted by the array antenna 306.

Fig. 14 shows that the directional beams transmitted by the array antennas 302, 304, and 306 are formed in different directions; however, those directional beams would be finally received by the array antenna 402 of the terminal device. It is assumed that the directional beams transmitted by the array antennas 302 and 306 would be reflected and then received by the terminal device.

The terminal device receive a directional beam 452, which is designated by the information "3" to identify the directional beam, by the array antenna 402. The directional beam 452 is broader than the directional beams 352-356 transmitted by the wireless base station device. In general, an antenna mounting area of the terminal device is smaller than an antenna mounting area of the wireless base station device; hence, the terminal device should be equipped with a smaller number of antenna elements. Compared to the wireless base station device, the terminal device is unable to converge emission angles of directional beams in a narrow range of emission.

However, the terminal device is able to receive reflective waves incoming thereto with a certain range of angles deviated from the correct direction of each directional beam. The terminal device is able to receive direct waves transmitted by the array antenna 304 of the wireless base station device unless the propagation path of radio waves is not blocked out by any obstruction such as vehicles and humans. Even when the terminal device is unable to receive direct waves being blocked out by obstruction, the terminal device may receive directional beams transmitted by the array antennas 302 and 306 through any paths allowing for propagation of waves reflected by obstruction such as glass materials. Enabling the terminal device to receive the same signal as direct waves by receiving reflective waves even when propagation of direct beams is blocked out, the wireless base station should transmit the same signal at the same frequency by each of multiple array antennas.

Even when the terminal device receives multiple signals transmitted through different paths, the terminal device is able to obtain desired data by decoding signals while compensating for multi-path interference. For example, it is possible for the terminal device to easily decode the same signal incoming through multiple paths while compensating for multi-path interference when the wireless base station device transmits OFDMA signal to the terminal device.

### <Second setting example of directivity>

Fig. 15 shows the situation that after starting communication by setting directivity to two array antennas, a directional beam transmitted by one array antenna is blocked out by obstruction. In this situation, as a countermeasure to enable communication using the array antenna 102 currently transmitting a directional beam blocked out by obstruction, and therefore, it is preferable for the wireless base station device 100 to carry out a procedure shown in Fig. 13 with respect to the array antenna 102. That is, the wireless base station device 100 sets directivity enabling communication with the terminal device 200 via the array antenna 102. In this case, a directivity adjustment feedback signal may include the information to identify a directivity adjustment signal having the highest rank of reception strength or signal quality as well as the second or third rank of reception strength or signal quality, and the information to identify an array antenna used to transmit the directivity adjustment signal, wherein it is possible to carry out the procedure shown in Fig. 13 based on the information to identify the directivity adjustment signal having the second or third rank of reception strength or signal quality.

The aforementioned embodiment has been described with respect to the directivity adjustment feedback signal including the information to identify the directivity adjustment signal having the highest reception strength or the highest signal quality, and the information to identify the array antenna of the terminal device 200 used to transmit the directivity adjustment signal; but this is not a restriction. For example, the directivity adjustment feedback signal may include the information to identify the directivity adjustment signal having the highest rank of reception strength or signal quality as well as the second or third rank of reception strength or signal quality, and the information to identify the array antenna of the terminal device 200 used to transmit the directivity adjustment signal.

Accordingly, it is possible to attempt setting pathways based on the information to identify a directivity adjustment signal having the second or third rank of reception strength or signal quality when the wireless base station device attempts to set pathways based on the information to identify the directivity adjustment signal having the highest reception strength or the highest signal quality but fails to do so.

When the foregoing process to start adjusting directivity reveals a combination of array antennas which fail to exchange a directivity adjustment start signal and a directivity adjustment response signal between a wireless base station device and a terminal device, it is possible to omit subsequent processes for the combination of array antennas.

Due to the limited space of mounting array antennas in the terminal device, the terminal device may be reduced in terms of the number of array antennas and the number of antenna elements included in each array antenna. Reducing the number of antenna elements in each array antenna may not sharpen the formation of each directional beam, and therefore, it may be difficult to set a plurality of communication pathways having small spatial correlation. Even in the above situation, the wireless base station device should optimize the communication method through the procedure to adjust directional beams transmitted by array antennas by selecting directional beams or adjusting methods of using directional beams with the terminal device.

According to the wireless communication system of the present embodiment, it is possible to exchange information regarding an available communication method mutually applicable to a wireless base station device and a terminal device during the process of establishing wireless connections, to adjust array antennas based on the available communication method, and to thereby carry out wireless communication. Accordingly, it is possible to make an adjustment as to which communication method should be selected for establishing a wireless communication between the wireless base station device and the terminal device even when the wireless base station device and the terminal device differ from each other in terms of the number of array antennas and available specifications of array antennas for transmission and reception of data.

In addition, it is possible to transmit the same signal to the terminal device via multiple array antennas mounted on the wireless base station device. Accordingly, even when part of signals to be transmitted to the terminal device is blocked out, it is possible for the terminal device to receive signals via remaining array antennas. That is, it is possible to carry out an optimum wireless communication even in the environment in which wireless signals to be directly transmitted to the terminal device are suddenly blocked out.

### <Second Embodiment>

### <Wireless communication system>

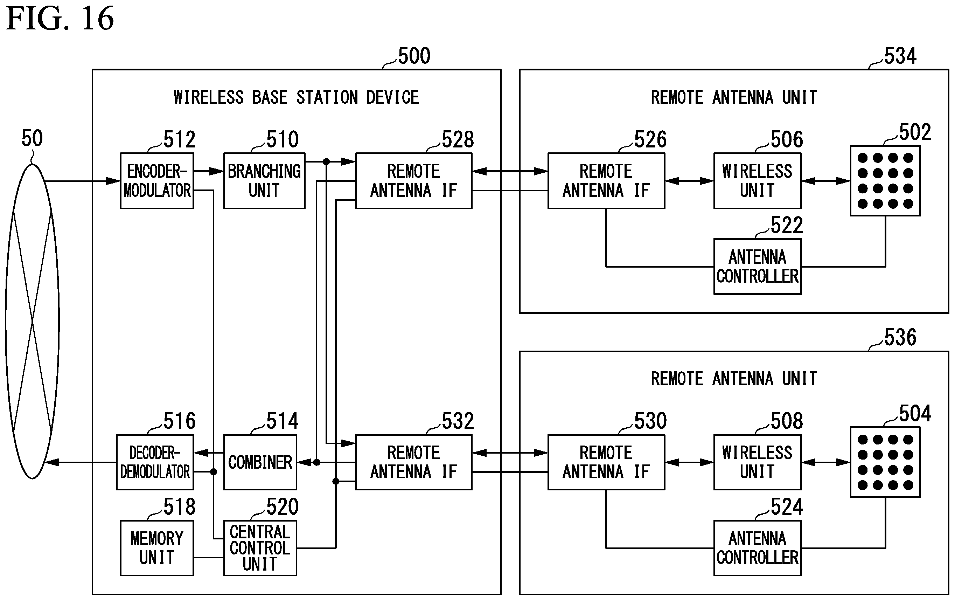

A wireless communication system according to the second embodiment of the present invention will be described with reference to Fig. 16. The wireless communication system of the second embodiment differs from the wireless communication system of the first embodiment in terms of the configuration of a wireless base station device. The wireless base station device of the present embodiment is characterized by replacing array antennas with remote antenna units, which are extended units located at remote places separated from the main body of the wireless base station device. The wireless base station device of the present embodiment includes a main unit 500 of the wireless base station device, a remote antenna unit 534, and a remote antenna unit 536. The main body 500 of the wireless base station device includes a remote antenna IF 528, a remote antenna IF 532, a branching unit 510, a combiner 514, an encoder-modulator 512, a decoder-demodulator 516, a memory unit 518, and a central control unit 520.

The remote antenna unit 534 includes an array antenna 502, a wireless unit 506, a remote antenna IF 526, and an antenna controller 522. The remote antenna unit 536 includes an array antenna 504, a wireless unit 508, a remote antenna IF 530, and an antenna controller 524. The remote antenna unit 534 is equipped with the wireless unit 506 in order to cope with great attenuation of high-frequency components converted to electric signals in the electrical circuitry.

It is possible to apply the branching unit 110, the combiner 114, the encoder-modulator 112, the decoder-demodulator 116, the memory unit 118, and the central control unit 120, which are described with reference to Fig. 7, to the branching unit 510, the combiner 514, the encoder-modulator 512, the decoder-demodulator 516, the memory unit 518, and the central control unit 520. In addition, it is possible to apply the array antenna 102, the wireless unit 106, and the antenna controller 122, which are described with reference to Fig. 7, to the array antenna 502, the wireless unit 506, and the antenna controller 522. Moreover, it is possible to apply the array antenna 104, the wireless unit 108, and the antenna controller 122, which are described with reference to Fig. 7, to the array antenna 504, the wireless unit 508, and the antenna controller 524.

The remote antenna IF 528 is an IF configured to connect the main body 500 of the wireless base station device to the remote antenna IF 526 of the remote antenna unit 534. It is possible to establish the wired connection using metal wires or optical fibers between the remote antenna IF 528 and the remote antenna IF 526, or it is possible to wirelessly connect the remote antenna IFs 528 and 526 according to a highspeed wireless communication method, wherein it is preferable to reduce communication delays as small as possible. In this connection, the central control unit 520 and the antenna controller 522 may transmit or receive control signals to control directional beams transmitted via the array antenna 502, and therefore, control signals are superposed on signals which are transmitted to or received by the terminal device via space between the remote antenna IF 528 and the remote antenna IF 526.

The remote antenna IF 532 is an IF configured to connect the main body 500 of the wireless base station device and the remote antenna IF 530 of the remote antenna unit 536. It is possible to establish the wired connection using metal wires or optical fibers between the remote antenna IF 532 and the remote antenna IF 530, or it is possible to wirelessly connect the remote antenna IFs 532 and 530 according to a highspeed wireless communication method, wherein it is preferable to reduce communication delays as small as possible. In this connection, the central control unit 520 and the antenna controller 524 may transmit or receive control signals to control directional beams transmitted via the array antenna 504, and therefore, control signals are superposed on signals which are transmitted to or received by the terminal device via space between the remote antenna IF 532 and the remote antenna IF 530.

The foregoing operation shown in Fig. 13 can be applied to the wireless communication system using the wireless base station device of the present embodiment.

The following description refers to the situation that an unspecified user may set up a wireless base station device operable at a frequency band requiring no license like a wireless LAN so that the wireless base station device can share the same environment with the terminal device(s). For example, the wireless base station device monitors the usage status of radio waves in surrounding areas before transmitting signals, and then, the wireless base station device starts transmitting signals when no radio waves are used at its adapted frequency or when the wireless base station device determines that small influences would be exerted to the terminal device or another wireless base station device located in surrounding areas.

According to the present embodiment, it is possible for the wireless base station device to transmit signals to the terminal device based on the usage status of radio waves measured by remote antenna units separated from each other, i.e. when no radio waves are used at its adapted frequency or when the wireless terminal device determines that small influences would be exerted to the terminal device or another wireless base station device located in surrounding areas.

Compared to the wireless base station device using no remote antenna units, it is possible to increase the frequency of exchanging communications between the wireless base station device and the terminal device. In addition, it is possible to extend remote antenna units including array antennas from the wireless base station device. Thus, it is possible to transmit signals to or receive signals from the terminal device at remote places separated from the main body of the wireless base station device.

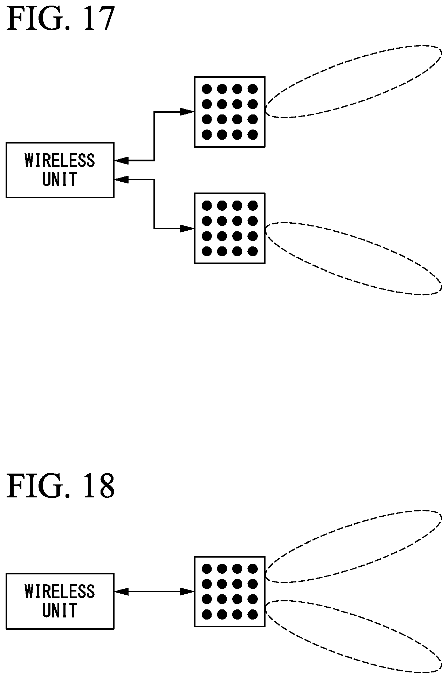

The foregoing embodiments refers to the configuration that a single wireless unit is applied to each array antenna. This makes it possible to transmit a single directional beam via each array antenna. As shown in Fig. 17, it is possible to provide a single wireless unit for multiple array antennas. That is, the wireless unit is able to send high-frequency signals to multiple array antennas, which in turn transmit high-frequency signals supplied by the wireless unit.

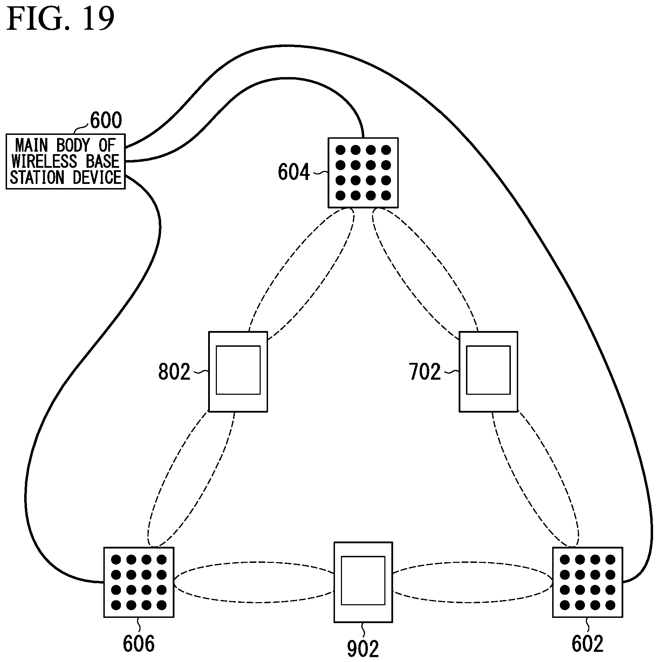

As shown in Fig. 18, it is possible to divide a plurality of antenna elements included in each array antenna into multiple combinations of antenna elements, each of which may serve as an array antenna. This makes it possible for a single array antenna to transmit multiple directional beams. In addition, it is possible for the second embodiment to employ an array antenna shown in Fig. 18, wherein it is possible to guide directional beams towards different terminal devices by concurrently transmitting multiple directional beams via a single array antenna as shown in Fig. 19.

The aforementioned embodiments have been described with reference to communications between the wireless base station device and the terminal device; however, those embodiments can be applied to communications between a transmitting device and a receiving device.

As shown in Fig. 19, for example, a wireless base station device 600 is connected to an array antenna 602, an array antenna 604, and an array antenna 606. The array antenna 602 transmits two directional beams towards a terminal device 702 and a terminal device 902; the array antenna 604 transmits two directional beams towards the terminal device 702 and a terminal device 802; the array antenna 606 transmits two directional beams towards the terminal device 802 and the terminal device 902. Accordingly, it is possible to improve space utility efficiency since each array antenna is able to emit directional beams towards multiple terminal devices.

In the aforementioned embodiments, array antennas are described as one example of directional antennas; wireless base station devices are described as one example of transmitting devices; terminal devices are described as one example of receiving devices; directivity adjustment signals are described as one example of multiple directional beams having different directivity; directivity adjustment feedback signals are described as one example of information representing directional beams; array communication capability information is described as one example of information representing the number of antennas and the method of transmitting multiple directional beams via multiple directional antennas. In addition, array communication capability signals are described as one example of first signals; directivity adjustment start signals are described as one example of second signals; directivity adjustment feedback signals are described as one example of third signals, e.g. one example of directivity adjustment response signals including information representing the number of directional antennas mounted on a transmitting device, information to identify directional antennas, and information representing the reception status of directional beams transmitted via directional antennas.

The present invention has been described with reference to embodiments and variations, which are simply illustrative ones; hence, skilled person in the art may understand any variations, modifications, substitutions, and replacements. For the sake of explanation, the foregoing devices according to the embodiments are described using functional block diagrams, whereas those devices can be designed using hardware, software, or combination of hardware and software. The present invention are not necessarily limited to the foregoing embodiments; hence, the present invention may embrace any variations, modifications, substitutions, and replacements without departing from the spirits of the invention.

### REFERENCE SIGNS LIST

- 100: wireless base station device
- 102, 104: array antenna
- 110: branching unit
- 112: encoder-modulator
- 114: combiner
- 116: decoder-demodulator
- 118: memory unit
- 120: central control unit
- 122: antenna controller
- 200: terminal device
- 202, 204: array antenna
- 206, 208: wireless unit
- 210: branching unit
- 212: encoder-modulator
- 214: combiner
- 216: decoder-demodulator
- 218: memory unit
- 220: central control unit
- 222: antenna controller

## Claims

1. A wireless communication system comprising a transmitting device equipped with a plurality of directional antennas, and a receiving device configured to wirelessly communicate with the transmitting device,
wherein the transmitting device sequentially transmits a plurality of directional beams having different directivity via the plurality of directional antennas, thus setting directivity for each directional beam transmitted to the receiving device according to a response signal to the plurality of directional beams, and
wherein the receiving device sequentially receives the plurality of directional beams so as to select one or more appropriate directional beams among the plurality of directional beams, thus notifying the transmitting device of information representing a selected directional beam.

2. The wireless communication system according to claim 1, wherein the transmitting device sequentially transmits first signals, each including a number of directional antennas and a transmitting method of the plurality of directional beams, to the receiving device via each of the plurality of directional antennas, thus setting a transmitting method of the plurality of directional beams according to a first response signal to the first signal, and
wherein the receiving device sequentially receives the first signals so as to notify the transmitting device of the first response signal including information representing a reception status of the first signals.

3. The wireless communication system according to claim 2, wherein the transmitting device transmits the first signals in an omnidirectional pattern.

4. The wireless communication system according to any one of claims 1 to 3, wherein each of the plurality of directional beams includes information to identify each directional beam and information to identify each directional antenna used to transmit each directional beam.

5. The wireless communication system according to any one of claims 1 to 4, wherein each of the plurality of directional antennas includes a plurality of antenna elements.

6. A transmitting device equipped with a plurality of directional antennas, comprising:
a controller configured to control sequentially transmitting a plurality of directional beams to a receiving device via each of the plurality of directional antennas; and
an antenna controller configured to control directivity for each of the plurality of directional antennas in order to transmit each of the plurality of directional beams,
wherein the controller sets the directivity for each directional beam to be transmitted to the receiving device with the antenna controller according to a response signal to the plurality of directional beams.

7. The transmitting device according to claim 6, wherein the controller sequentially transmits first signals each including information representing a number of directional antennas and information representing a transmitting method of the plurality of directional beams to the receiving device via each of the plurality of directional antennas, thus controlling setting the transmitting method of the plurality of directional beams.

8. The transmitting device according to claim 6 or 7, wherein the controller controls sequentially transmitting second signals each including information representing a number of directional antennas and information to identify each of the plurality of directional beams to the receiving device via each of the plurality of directional antennas.

9. The transmitting device according to any one of claims 6 to 8, wherein the controller incorporates information to identify each directional antenna used to transmit each directional beam and information to identify each directional beam into each of the plurality of directional beams.

10. The transmitting device according to any one of claims 6 to 9, wherein the controller controls transmits a third signal including information representing each directional antenna of the receiving device and information to identify an appropriate directional beam among the plurality of directional beams transmitted via each directional antenna.

11. A receiving device configured to wirelessly communicate with a transmitting device equipped with a plurality of directional antennas, comprising:
a wireless unit configured to sequentially receive a plurality of directional beams each having different directivity transmitted by the transmitting device via each of the plurality of directional antennas; and
a controller configured to select one or more appropriate directional beams among the plurality of directional beams received by the wireless unit,
wherein the wireless unit transmits information representing the appropriate directional beam selected by the controller to the transmitting device.

12. The receiving device according to claim 11, wherein the controller controls transmitting a signal including information representing a number of directional antennas mounted on the transmitting device, information to identify each directional antenna, and information representing a reception status of each directional beam transmitted via each directional antenna.

13. A communication method implemented by a transmitting device equipped with a plurality of directional antennas and a receiving device configured to wirelessly communicate with the transmitting device, comprising:
sequentially transmitting a plurality of directional beams each having different directivity from the transmitting device to the receiving device via each of the plurality of directional antennas, thus setting directivity for each directional beam to be transmitted to the receiving device according to a response signal to the plurality of directional beams; and
sequentially receiving the plurality of directional beams with the receiving device and thereby selecting one or more appropriate directional beams among the plurality of directional beams, thus notifying the transmitting device of information representing a selected directional beam.
